# EUROPEAN PATENT APPLICATION

(11) **EP 2 312 358 A2**
(43) Date of publication of application: **20.04.2011**
(21) Application number: 10186989.9
(22) Date of filing: 08.10.2010
(51) Int. Cl.: G02B 6/42

(54) **Method of manufacturing optical sensor module and optical sensor module obtained thereby**

(30) Priority: 14.10.2009 JP 2009237771; 16.02.2010 JP 2010030802
(71) Applicant: Nitto Denko Corporation, Ibaraki-shi Osaka 567-8680 (JP)
(72) Inventor: Hodono, Masayuki, Osaka 567-8680 (JP)
(74) Representative: HOFFMANN EITLE

(57) **Abstract**

A method of manufacturing an optical sensor module which eliminates the need for the operation of alignment between a core in an optical waveguide section and an optical element in a substrate section and which achieves improvement in alignment accuracy and reduction in costs, and an optical sensor module obtained thereby. An optical waveguide section W₂ including protruding portions 4 for the positioning of a substrate section and groove portions 3b for fitting engagement with the substrate section, and a substrate section E₂ including positioning plate portions 5a to be positioned in the protruding portions 4 and fitting plate portions 5b for fitting engagement with the groove portions 3b are individually produced.

## Description

### BACKGROUND OF THE INVENTION

### 1. Field of the invention

The present invention relates to a method of manufacturing an optical sensor module including an optical waveguide section and a substrate section with an optical element mounted therein, and to an optical sensor module obtained thereby.

### 2. Description of the Related Art

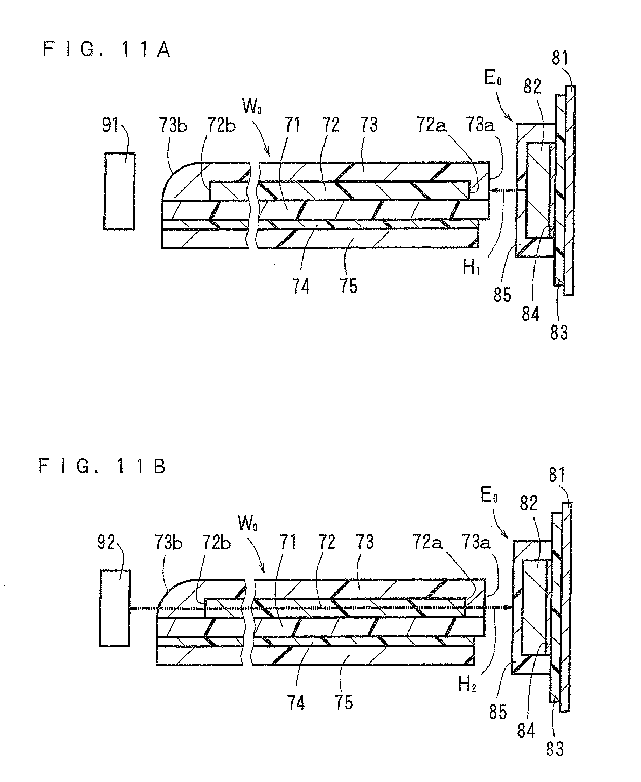

As shown in FIGS. 11A and 11B, an optical sensor module is manufactured by: individually producing an optical waveguide section W₀ in which an under cladding layer 71, a core 72 and an over cladding layer 73 are disposed in the order named, and a substrate section E₀ in which an optical element 82 is mounted on a substrate 81; and then connecting the above-mentioned substrate section E₀ to an end portion of the above-mentioned optical waveguide section W₀, with the core 72 of the above-mentioned optical waveguide section W₀ and the optical element 82 of the substrate section E₀ kept in alignment with each other. In FIGS. 11A and 11B, the reference numeral 74 designates an adhesive layer, 75 designates a base, 83 designates an insulation layer, 84 designates an optical element mounting pad, and 85 designates a transparent resin layer.

The above-mentioned alignment between the core 72 of the above-mentioned optical waveguide section W₀ and the optical element 82 of the substrate section E₀ is generally performed by using a self-aligning machine (see, for example, Japanese Published Patent Application No. 5-196831). In this self-aligning machine, the alignment is performed, with the optical waveguide section W₀ fixed on a fixed stage (not shown) and the substrate section E₀ fixed on a movable stage (not shown). Specifically, when the above-mentioned optical element 82 is a light-emitting element, the alignment is as follows. As shown in FIG. 11A, while the position of the light-emitting element is changed relative to a first end surface (light entrance) 72a of the core 72, with light H₁ emitted from the light-emitting element, the amount of light emitted outwardly from a second end surface (light exit) 72b of the core 72 through a lens portion 73b provided in a second end portion of the over cladding layer 73 (the voltage developed across a light-receiving element 91 provided in the self-aligning machine) is monitored. Then, the position in which the amount of light is maximum is determined as an alignment position (a position in which the core 72 and the optical element 82 are appropriate relative to each other). On the other hand, when the above-mentioned optical element 82 is a light-receiving element, the alignment is as follows. As shown in FIG. 11B, the second end surface 72b of the core 72 receives a constant amount of light (light emitted from a light-emitting element 92 provided in the self-aligning machine and transmitted through the lens portion 73b provided in the second end portion of the over cladding layer 73) H₂. While the position of the light-receiving element is changed relative to the first end surface 72a of the core 72, with the light H₂ emitted outwardly from the first end surface 72a of the core 72 through a first end portion 73a of the over cladding layer 73, the amount of light received by the light-receiving element (the voltage) is monitored. Then, the position in which the amount of light is maximum is determined as the alignment position.

### SUMMARY OF THE INVENTION

While the alignment using the above-mentioned self-aligning machine can be high-precision alignment, it requires labor and time and is therefore unsuited for mass production.

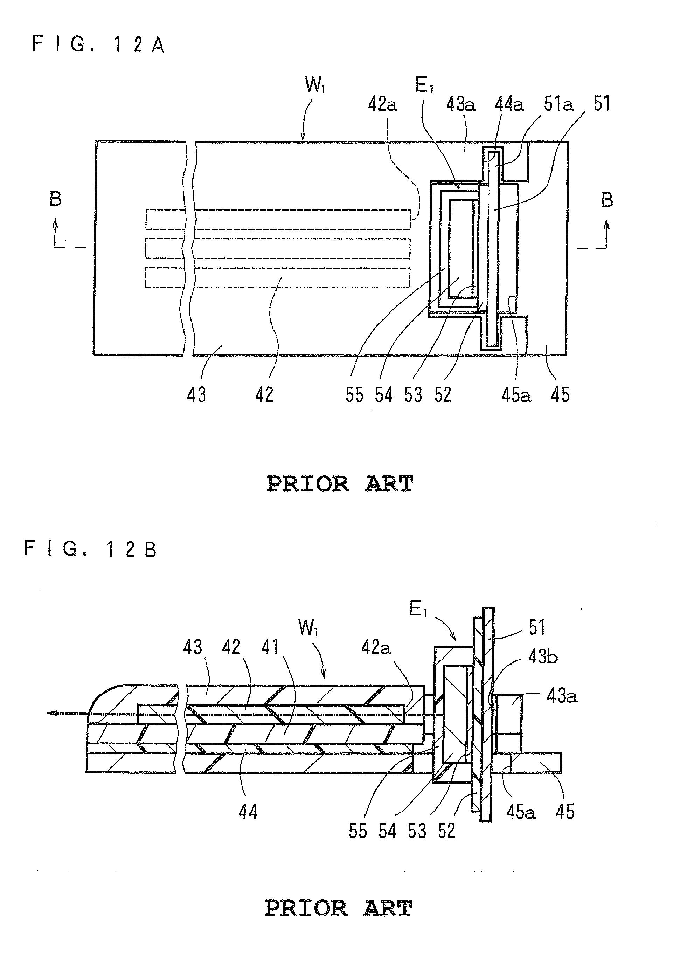

The assignee of the present application has proposed an optical sensor module capable of achieving alignment without equipment and labor as mentioned above, and has already applied for a patent (Japanese Patent Application No. 2009-180723; U.S. Patent Application No. 12/847,121). As shown in plan view in FIG. 12A and in sectional view taken along the line B-B of FIG. 12A in FIG. 12B, this optical sensor module is formed in such a manner that, when an over cladding layer 43 is formed by die-molding in an optical waveguide section W₁, portions of the over cladding layer 43 which do not cover cores 42 (upper and lower portions thereof at its right-hand end as seen in FIG. 12A) are extended in an axial direction. At that time, groove portions (fitting portions) 43b for fitting engagement with the substrate section are formed in the respective extensions 43a at the same time as the die-molding of the above-mentioned over cladding layer 43 so as to be placed in an appropriate position relative to first end surfaces 42a of the respective cores 42. On the other hand, fitting plate portions (to-be-fitted portions) 51a for fitting engagement with the above-mentioned groove portions 43b are formed in a substrate section E₁ so as to be placed in an appropriate position relative to an optical element 54. By the fitting engagement between the groove portions 43b of the above-mentioned optical waveguide section W₁ and the fitting plate portions 51a of the above-mentioned substrate section E₁, the optical waveguide section W₁ and the above-mentioned substrate section E₁ are coupled to each other to provide an automatically aligned optical sensor module. In FIGS. 12A and 12B, the reference numeral 41 designates an under cladding layer, 44 designates an adhesive layer, 45 designates a base, the reference character 45a designates a through hole, 51 designates a shaping substrate formed with the above-mentioned fitting plate portions 51a, 52 designates an insulation layer, 53 designates an optical element mounting pad, and 55 designates a transparent resin layer.

In this manner, the above-mentioned method already applied by the assignee of the present application is capable of automatically bringing the cores 42 of the optical waveguide section W₁ and the optical element 54 of the substrate section E₁ into alignment with each other without any alignment operation. Because the need for the time-consuming alignment operation is eliminated, this method allows the mass production of optical sensor modules and is excellent in productivity. However, the above-mentioned method still has room for improvement in alignment accuracy and in costs. Specifically, the above-mentioned method provides a slightly low alignment accuracy of ± 100 *µ*m, and employs a light-emitting element having a relatively high output for the purpose of causing light from the light-emitting element (the optical element 54) to appropriately enter the first end surfaces (light entrance) 42a of the respective cores 42. This results in the increase in the cost of the light-emitting element. Also, since the alignment accuracy is achieved by the groove portions 43b of the over cladding layer 43 formed by the die-molding, the production of a molding die for use in the die-molding requires a high level of machining accuracy (± 15 *µ*m)*.* This results in the increase in the cost of the molding die.

In view of the foregoing, it is an object of the present invention to provide a method of manufacturing an optical sensor module which eliminates the need for the operation of alignment between a core in an optical waveguide section and an optical element in a substrate section and which achieves improvement in alignment accuracy and reduction in costs, and an optical sensor module obtained thereby.

To accomplish the above-mentioned object, a first aspect of the present invention is intended for a method of manufacturing an optical sensor module provided by coupling an optical waveguide section and a substrate section with an optical element mounted therein together, wherein the step of producing said optical waveguide section includes the step of forming a linear core for an optical path on a surface of an under classing layer by a photolithographic process using a single photomask and at the same time forming positioning member for the positioning of the substrate section in a portion lying in an appropriate position relative to an end portion of the core, and the step of forming fitting portions for fitting engagement with said substrate section in a portion of an over cladding layer at the same time as forming the over cladding layer for covering said core by a die-molding process, wherein the step of producing said substrate section includes the step of placing an optical element mounting pad on a substrate, forming to-be-positioned portions to be positioned in the positioning member for the positioning of said substrate section in an appropriate position of the substrate relative to the optical element mounting pad, and at the same time forming to-be-fitted portions for fitting engagement with the fitting portions for fitting engagement with said substrate section, and the step of mounting the optical element on said optical element mounting pad, and wherein the step of coupling said optical waveguide section and said substrate section together to form the optical sensor module includes the step of positioning said to-be-positioned portions of said substrate section by using said positioning member of said optical waveguide section and bringing said to-be-fitted portions of said substrate section into fitting engagement with said fitting portions of said optical waveguide section.

A second aspect of the present invention is intended for an optical sensor module comprising: an optical waveguide section; and a substrate section with an optical element mounted therein, said optical waveguide section and said substrate section being coupled to each other, said optical waveguide section including an under cladding layer, a linear core for an optical path and formed on a surface of the under cladding layer, positioning member for the positioning of the substrate section and formed in a portion lying in an appropriate position relative to an end portion of the core, an over cladding layer for covering said core, and fitting portions for fitting engagement with the substrate section and formed in a predetermined portion of the over cladding layer, said substrate section including a substrate having to-be-positioned portions to be positioned in the positioning member for the positioning of said substrate section, and to-be-fitted portions for fitting engagement with the fitting portions for fitting engagement with said substrate section, an optical element mounting pad placed in a predetermined portion on the substrate, and the optical element mounted on the optical element mounting pad, the coupling between said optical waveguide section and said substrate section being provided by the positioning of said to-be-positioned portions of said substrate section by using said positioning member of said optical waveguide section, and by the fitting engagement of said to-be-fitted portions of said substrate section with said fitting portions of said optical waveguide section.

In the step of producing the optical waveguide section in the method of manufacturing the optical sensor module according to the present invention, the positioning member for the positioning of the substrate section are formed on the surface of the under cladding layer by the photolithographic process using the single photomask at the same time as the core. Thus, the positional relationship between the end portion of the core and the positioning member for the positioning of the substrate section are highly precise. Thereafter, the fitting portions for fitting engagement with the substrate section are formed in part of the over cladding layer during the formation of the over cladding layer by the die-molding process. The positioning of the substrate section is achieved by using the above-mentioned positioning member, and the above-mentioned fitting portions are provided to hold the above-mentioned substrate section. For this reason, the production of the molding die for use in the formation of the above-mentioned fitting portions in part of the over cladding layer does not require a high level of machining accuracy. The costs of the molding die are accordingly reduced. In the step of producing the substrate section, on the other hand, the to-be-fitted portions for fitting engagement with the fitting portions for fitting engagement with the substrate section are formed in an appropriate position relative to the optical element mounting pad at the same time as the to-be-positioned portions to be positioned in the positioning member for the positioning of the above-mentioned substrate section. Thus, the optical element mounted on the above-mentioned optical element mounting pad and the to-be-positioned portions are placed in an appropriate positional relationship. Then, in the step of coupling the above-mentioned optical waveguide section and the above-mentioned substrate section together to form the optical sensor module, the to-be-positioned portions of the substrate section are positioned by using the positioning member of the optical waveguide section, and the to-be-fitted portions of the substrate section are brought into fitting engagement with the fitting portions of the optical waveguide section, whereby the optical waveguide section and the substrate section are integrated together. In other words, in this step, the to-be-positioned portions placed in an appropriate positional relationship with the optical element are positioned by using the positioning member placed in a highly precise positional relationship with the end portion of the core, and the to-be-fitted portions of the substrate section are brought into fitting engagement with the fitting portions of the optical waveguide section for the purpose of maintaining the positioned condition. Thus, the positional relationship between the end portion of the core and the optical element are highly precise in the manufactured optical sensor module, so that the propagation of light between the end portion of the core and the optical element is appropriately achieved. As a result, the optical element need not necessarily be a high-power optical element. The costs of the optical element are accordingly reduced. Thus, the method of manufacturing the optical sensor module according to the present invention is capable of automatically keeping the core of the optical waveguide section and the optical element of the substrate section in high-precision alignment with each other without any alignment operation, and is capable of reducing costs. Because the need for the time-consuming alignment operation is eliminated, this method allows the mass production of optical sensor modules.

In particular, when the above-mentioned positioning member of the above-mentioned optical waveguide section are in the form of protruding portions of a generally U-shaped plan configuration, of an L-shaped plan configuration or of parallel strips configuration and the above-mentioned to-be-positioned portions of the above-mentioned substrate section are in the form of plate portions for abutment against the inside surfaces of the above-mentioned protruding portions, then the method provides better productivity because the positioning of the protruding portions (the positioning member) and the plate portions (the to-be-positioned portions) is easy. The protruding portions may also be formed with a tapered portion.

Also, when the above-mentioned fitting portions of the above-mentioned optical waveguide section are in the form of groove portions extending across the thickness of the over cladding layer, and the width of portions of the groove portions corresponding to an upper surface portion of the over cladding layer decreases gradually in a downward direction from the upper surface of the over cladding layer, when the above-mentioned to-be-fitted portions of the above-mentioned substrate section are in the form of plate portions for fitting engagement with the above-mentioned groove portions, when the above-mentioned positioning member of the above-mentioned optical waveguide section are in the form of protruding portions of a generally U-shaped plan configuration, and the width of a generally U-shaped opening portion of the protruding portions decreases gradually in an inward direction from the opening end thereof, when the above-mentioned to-be-positioned portions of the above-mentioned substrate section are in the form of plate portions for abutment against the inside surfaces of the above-mentioned protruding portions, and when the optical waveguide section and the substrate section are coupled together by inserting the above-mentioned to-be-fitted portions of the substrate section into the upper ends of the above-mentioned groove portions of the optical waveguide section and thereafter inserting the above-mentioned to-be-positioned portions of the substrate section into the opening ends of the above-mentioned protruding portions of the generally U-shaped plan configuration to bring the above-mentioned to-be-positioned portions into abutment with the inner ends of the protruding portions, then the method provides further improved productivity because the positioning of the groove portions (the fitting portions) and the plate portions (the to-be-fitted portions) and the positioning of the protruding portions (the positioning member) and the plate portions (the to-be-positioned portions) are easier.

Since the optical sensor module according to the present invention is obtained by the above-mentioned manufacturing method, the end portion of the core of the optical waveguide section and the optical element of the substrate section are positioned by the positioning of the to-be-positioned portions of the substrate section by using the positioning member of the optical waveguide section. The positioned condition is maintained by the fitting engagement of the to-be-fitted portions of the substrate section with the fitting portions of the optical waveguide section. Thus, if impacts, vibrations and the like are applied to the optical sensor module according to the present invention, the end portion of the above-mentioned core and the optical element do not move out of their positional relationship but are kept in high-precision alignment with each other.

In particular, when the above-mentioned positioning member of the above-mentioned optical waveguide section are in the form of protruding portions of a generally U-shaped plan configuration or of an L-shaped plan configuration and the above-mentioned to-be-positioned portions of the above-mentioned substrate section are in the form of plate portions for abutment against the inside surfaces of the above-mentioned protruding portions, then the optical sensor module kept in high-precision alignment by a simple positioning structure is provided.

Also, when the above-mentioned fitting portions of the above-mentioned optical waveguide section are in the form of groove portions extending across the thickness of the over cladding layer, and the width of portions of the groove portions corresponding to an upper surface portion of the over cladding layer decreases gradually in a downward direction from the upper surface of the over cladding layer, when the above-mentioned to-be-fitted portions of the above-mentioned substrate section are in the form of plate portions for fitting engagement with the above-mentioned groove portions, when the above-mentioned positioning member of the above-mentioned optical waveguide section are in the form of protruding portions of a generally U-shaped plan configuration, and the width of a generally U-shaped opening portion of the protruding portions decreases gradually in an inward direction from the opening end thereof, and when the above-mentioned to-be-positioned portions of the above-mentioned substrate section are in the form of plate portions for abutment against the inside surfaces of the above-mentioned protruding portions, then the optical sensor module kept in high-precision alignment by a simple positioning structure is provided.

### BRIEF DESCRIPTION OF THE DRAWINGS

FIG. 1 is a perspective view schematically showing one end portion of an optical sensor module according to a first embodiment of the present invention.
FIG. 2A is a plan view schematically showing the optical sensor module.
FIG. 2B is a sectional view taken along the line A-A of FIG. 2A.
FIG. 3 is a perspective view schematically showing one end portion of an optical waveguide section of the optical sensor module.
FIG. 4 is a perspective view schematically showing a substrate section of the optical sensor module.
FIGS. 5A to 5C are illustrations schematically showing the steps of forming an under cladding layer, a core, and protruding portions for the positioning of the substrate section in the optical waveguide section.
FIG. 6A is a perspective view schematically showing a molding die for use in the formation of an over cladding layer in the optical waveguide section.
FIGS. 6B to 6D are illustrations schematically showing the steps of forming the over cladding layer.
FIGS. 7A to 7D are illustrations schematically showing the steps of producing the substrate section.
FIG. 8 is a perspective view schematically showing one end portion of an optical sensor module according to a second embodiment of the present invention.
FIG. 9 is a plan view schematically showing a detection means for a touch panel using the optical sensor module.
FIG. 10A is a plan view schematically showing a groove portion according to the second embodiment of the present invention.
FIG. 10B is a sectional view taken along the line C-C of FIG. 10A.
FIG. 10C is a plan view schematically showing the protruding portions according to the second embodiment of the present invention.
FIGS. 11A and 11B are illustrations schematically showing a conventional method of alignment in an optical sensor module.
FIG. 12A is a plan view schematically showing an optical sensor module disclosed in a prior application of the assignee of the present application.
FIG. 12B is a sectional view taken along the line B-B of FIG. 12A.

### DETAILED DESCRIPTION

Next, embodiments according to the present invention will now be described in detail with reference to the drawings.

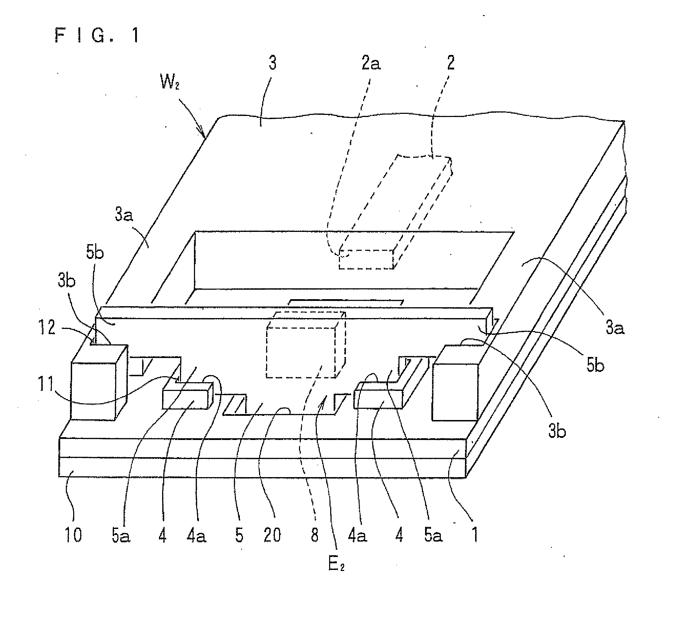

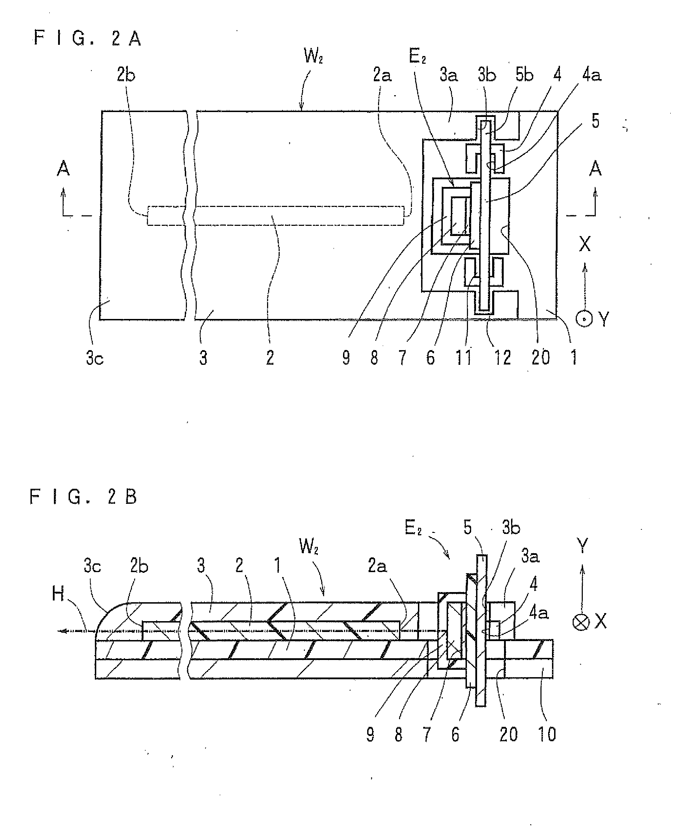

FIG. 1 is a perspective view schematically showing a first end portion (the right-hand end portion as seen in FIGS. 2A and 2B) of an optical sensor module according to a first embodiment of the present invention. FIG. 2A is a plan view schematically showing the above-mentioned optical sensor module, and FIG. 2B is a sectional view taken along the line A-A of FIG. 2A. This optical sensor module is configured such that an optical waveguide section W₂ and a substrate section E₂ are produced individually and then integrated together. Specifically, the optical waveguide section W₂ includes a pair of protruding portions (positioning member) 4 of a generally U-shaped plan configuration for the positioning of the substrate section, and a pair of groove portions (fitting portions) 3b for fitting engagement with the substrate section. On the other hand, the substrate section E₂ includes positioning plate portions (to-be-positioned portions) 5a to be positioned in slit portions (inside portions of the generally U-shaped configuration) 4a of the protruding portions 4 having the generally U-shaped plan configuration of the above-mentioned optical waveguide section W₂, and fitting plate portions (to-be-fitted portions) 5b for fitting engagement with the groove portions 3b of the above-mentioned optical waveguide section W₂. With the positioning plate portions 5a of the substrate section E₂ being positioned in the slit portions 4a of the protruding portions 4 having the generally U-shaped plan configuration of the optical waveguide section W₂, and with the fitting plate portions 5b of the substrate section E₂ being in fitting engagement with the groove portions 3b of the optical waveguide section W₂, the optical waveguide section W₂ and the substrate section E₂ are integrated together to constitute an optical sensor module.

In the optical waveguide section W₂, the above-mentionedprotrudingportions 4 for the positioning of the substrate section are formed at the same time as a core 2 by a photolithographic process using a single photomask, and are formed in an appropriate shape in a position determined with high precision relative to a first end surface 2a of the core 2. An optical element 8 is mounted in the substrate section E₂, and the above-mentioned positioning plate portions 5 a are formed in an appropriate shape in an appropriate position relative to the optical element 8. Thus, the first end surface 2a of the core 2 and the optical element 8 are positioned with high precision and are in high-precision alignment with each other by the positioning of the protruding portions 4 of the optical waveguide section W₂ and the positioning plate portions 5a of the substrate section E₂. Also, the above-mentioned high-precision alignment is maintained by the fitting engagement between the groove portions 3b of the optical waveguide section W₂ and the fitting plate portions 5b of the substrate section E₂.

The above-mentioned optical waveguide section W₂ is formed on a sheet material 10 made of stainless steel and the like. In FIGS. 1, 2A and 2B, clearance 11 is shown as created between the protruding portions 4 having the generally U-shaped plan configuration of the optical waveguide section W₂ and the positioned positioning plate portions 5a of the substrate section E₂, and clearance 12 is shown as created between the groove portions 3b of the optical waveguide section W₂ and the fitting plate portions 5b of the substrate section E₂, for the sake of easier understanding of the figures. In reality, however, the clearances 11 and 12 are almost zero. In FIGS. 1, 2A and 2B, the reference numeral 1 designates an under cladding layer, 3 designates an over cladding layer, the reference character 3a designates extensions, 3c designates a lens portion, 5 designates a shaping substrate, 6 designates an insulation layer, 7 designates an optical element mounting pad, 9 designates a transparent resin layer, and 20 designates a through hole.

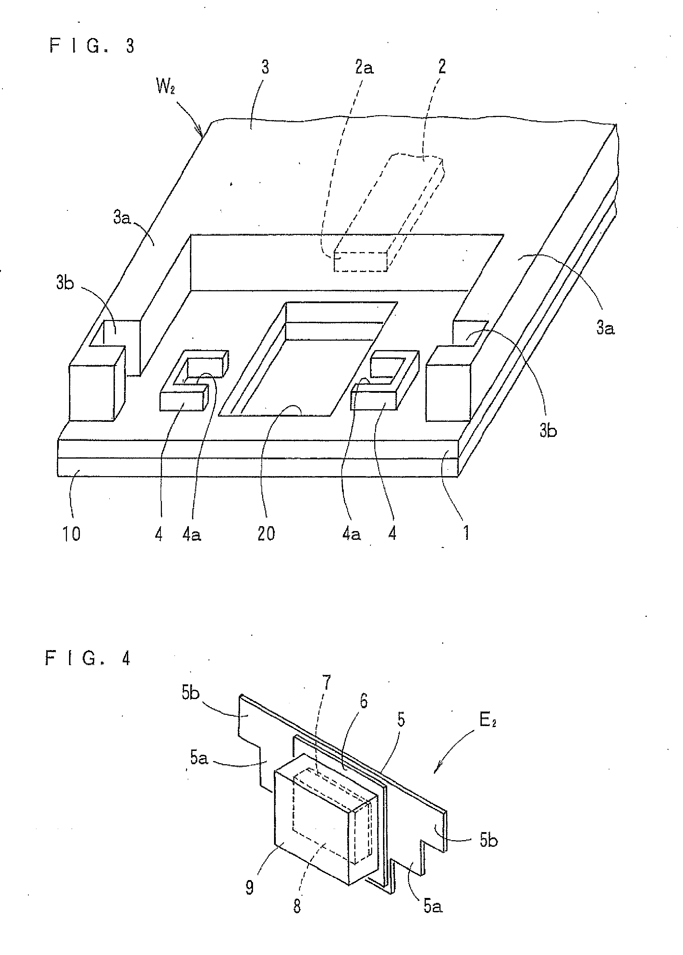

More specifically, the above-mentioned optical waveguide section W₂, a first end portion of which is shown in perspective view in FIG. 3, includes the under cladding layer 1, the core 2 for an optical path formed linearly in a predetermined pattern on a surface of this under cladding layer 1, the pair of protruding portions 4 having the generally U-shaped plan configuration and formed on the surface of this under cladding layer 1, and the over cladding layer 3 formed on the surface of the above-mentioned under cladding layer 1 so as to cover the core 2. The above-mentioned pair of protruding portions 4 having the generally U-shaped plan configuration are formed in positions some distance away from the first end surface 2a of the core 2, with their openings of the generally U-shaped configuration in face-to-face relation with each other. The direction in which the openings of the respective protruding portions 4 are in face-to-face relation with each other (the horizontal direction as seen in FIG. 3) is perpendicular to the axial direction of the core 2. The first end portion (the lower end portion as seen in FIG. 3) of the optical waveguide section W₁ includes left-hand and right-hand portions as seen in FIG. 3 extended axially (obliquely downwardly to the left as seen in FIG. 3). That is, these extensions 3a are those of the over cladding layer 3 where the core 2 is absent. The pair of groove portions 3b for fitting engagement with the substrate section are formed in the extensions 3a, respectively, with the openings of the respective groove portions 3b in face-to-face relation with each other. The groove portions 3b are in the form of a kind of notch extending across the thickness of the over cladding layer 3. In this embodiment, a second end portion (the left-hand end portion as seen in FIG. 2B) of the over cladding layer 3 is formed as a substantially quadrantal lens portion 3c having an outwardly bulging surface.

On the other hand, the above-mentioned substrate section E₂ includes the shaping substrate 5, the insulation layer 6, the optical element mounting pad 7, the optical element 8, and the transparent resin layer 9, as shown in perspective view in FIG. 4. The above-mentioned shaping substrate 5 is formed with the positioning plate portions 5a protruding both leftwardly and rightwardly for the positioning in the above-mentioned pair of protruding portions 4, and the fitting plate portions 5b protruding both leftwardly and rightwardly for fitting engagement with the above-mentioned groove portions 3b. The above-mentioned insulation layer 6 is formed on the surface of the above-mentioned shaping substrate 5 except where the positioning plate portions 5a and the fitting plate portions 5b are formed. The above-mentioned optical element mounting pad 7 is formed on a central portion of the surface of the above-mentioned insulation layer 6. The above-mentioned optical element 8 is mounted on the optical element mounting pad 7. The above-mentioned transparent resin layer 9 is formed so as to seal the above-mentioned optical element 8. The rectangular positioning plate portions 5a and fitting plate portions 5b included in the above-mentioned shaping substrate 5 and protruding leftwardly and rightwardly are formed by etching, and are appropriately positioned and shaped relative to the above-mentioned optical element mounting pad 7. The above-mentioned optical element 8 includes a light-emitting section or a light-receiving section formed on the surface of the optical element 8. An electric circuit (not shown) for connection to the optical element mounting pad 7 is formed on the surface of the above-mentioned insulation layer 6.

As shown in FIGS. 1, 2A and 2B, the above-mentioned optical sensor module is configured such that the optical waveguide section W₂ and the substrate section E₂ are integrated together by bringing the positioning plate portions 5a of the above-mentioned substrate section E₂ into abutment with the inside surfaces of the pair of protruding portions 4 having the generally U-shaped plan configuration of the above-mentioned optical waveguide section W₂ to position the positioning plate portions 5a in place and by bringing the fitting plate portions 5b of the above-mentioned substrate section E₂ into fitting engagement with the pair of groove portions 3b of the above-mentioned optical waveguide section W₂. In such an integrated condition, the surface (the light-emitting section or the light-receiving section) of the above-mentioned optical element 8 is opposed to the first end surface 2a of the core 2 with high precision. Thus, if the optical element 8 has a low output, the surface (the light-emitting section or the light-receiving section) of the above-mentioned optical element 8 is able to send or receive light with high precision. The above-mentioned optical element 8 is appropriately positioned in a vertical direction (along the X-axis) as seen in FIG. 2A relative to the under cladding layer 1 by the positioning of the above-mentioned positioning plate portions 5a in the above-mentioned pair of protruding portions 4 having the generally U-shaped plan configuration. Also, in the above-mentioned integrated condition, the lower end edges of the above-mentioned positioning plate portions 5a protruding leftwardly and rightwardly are in abutment with the surface of the under cladding layer 1, as shown in FIG. 1. This allows the appropriate positioning of the above-mentioned optical element 8 in a direction perpendicular to the surface of the under cladding layer 1 (along the Z-axis). That is, the first end surface 2a of the core 2 and the optical element 8 are in a highly precise positional relationship with each other and automatically kept in high-precision alignment with each other, as shown in FIG. 1, by the above-mentioned integration.

In this embodiment , the rectangular through hole 20 is formed in a portion of a laminate comprised of the sheet material 10 and the under cladding layer 1 corresponding to the above-mentioned substrate section E₂, as shown in FIGS. 1, 2A and 2B. A portion of the substrate section E₂ protrudes from the back surface of the above-mentioned sheet material 10 through the through hole 20, as shown in FIG. 2B. The protruding portion of the substrate section E₂ is connected on the back side of the sheet material 10 to, for example, a motherboard (not shown) and the like for the sending and the like of a signal to the optical element 8.

In the above-mentioned optical sensor module, a light beam H is propagated in a manner to be described below. Specifically, when the above-mentioned optical element 8 is, for example, a light-emitting element, the light beam H emitted from the light-emitting section of the optical element 8 passes through the transparent resin layer 9 and through the over cladding layer 3, and thereafter enters the core 2 through the first end surface 2a of the core 2, as shown in FIG. 2B. Then, the light beam H travels through the interior of the core 2 in the axial direction. Then, the light beam H exits from a second end surface 2b of the core 2. Thereafter, the light beam H exits from the lens surface of the lens portion 3c provided in the second end portion of the over cladding layer 3, with the divergence of the light beam H restrained by refraction through the lens portion 3c.

On the other hand, when the above-mentioned optical element 8 is a light-receiving element, a light beam travels in a direction opposite from that described above, although not shown. Specifically, the light beam enters the lens surface of the lens portion 3c provided in the second end portion of the over cladding layer 3, and enters the core 2 through the second end surface 2b of the above-mentioned core 2, while being narrowed down and converged by refraction through the lens portion 3c. Then, the light beam travels through the interior of the core 2 in the axial direction. The light beam passes through and exits from the over cladding layer 3, then passes through the transparent resin layer 9, and is received by the light-receiving section of the above-mentioned optical element 8.

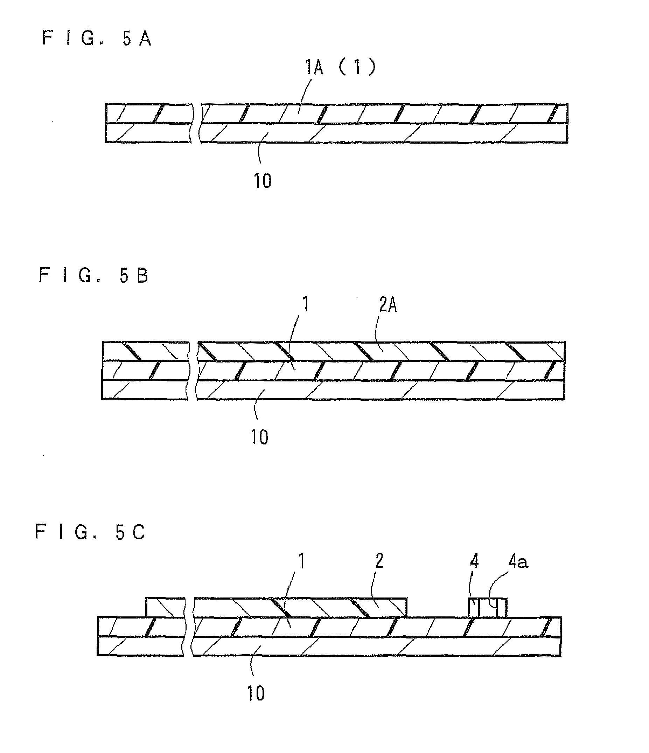

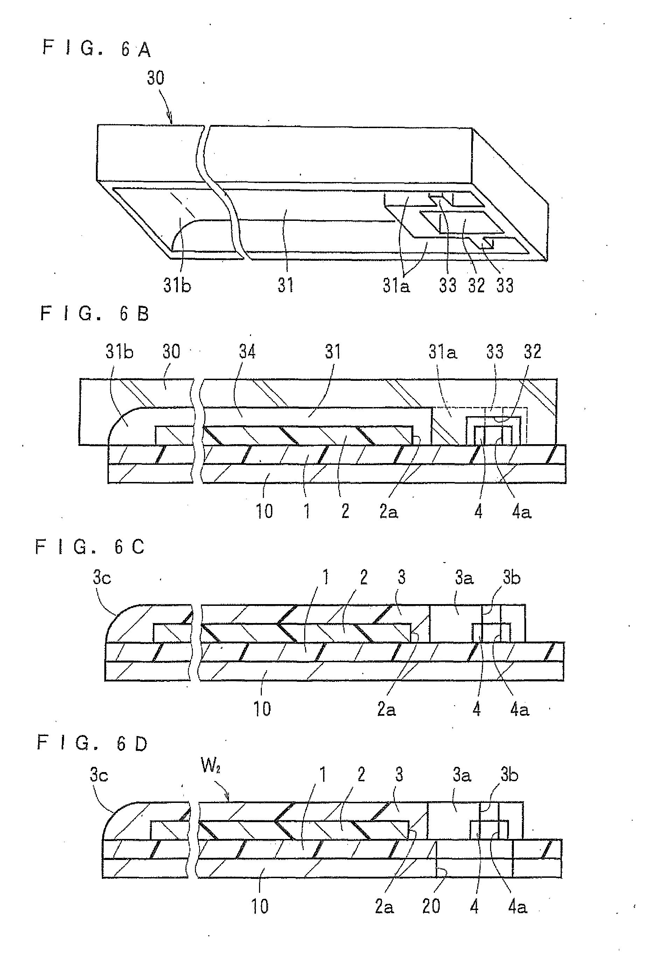

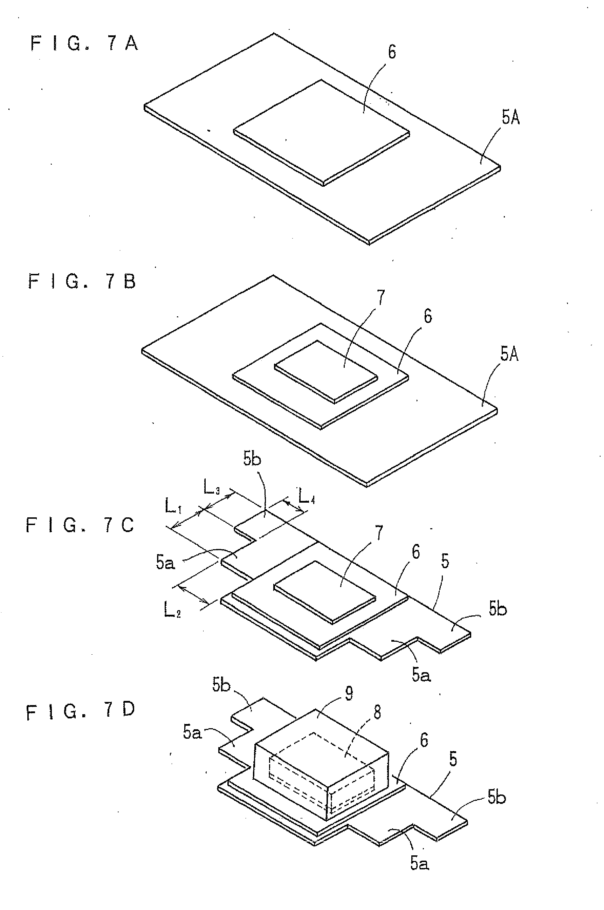

The above-mentioned optical sensor module is manufactured by undergoing the process steps (1) to (3) to be described below.
(1) The step of producing the above-mentioned optical waveguide section W₂ (with reference to FIGS. 5A to 5C, and FIGS. 6A to 6D).
(2) The step of producing the above-mentioned substrate section E₂ (with reference to FIGS. 7A to 7D).
(3) The step of coupling the above-mentioned substrate section E₂ to the above-mentioned optical waveguide section W₂.

The above-mentioned step (1) of producing the optical waveguide section W₂ will be described. First, the sheet material 10 of a flat shape (with reference to FIG. 5A) for use in the formation of the under cladding layer 1 is prepared. Examples of a material for the formation of the sheet material 10 include metal, resin, and the like. In particular, stainless steel is preferable. This is because the sheet material 10 made of stainless steel is excellent in resistance to thermal expansion and contraction so that various dimensions thereof are maintained substantially at their design values in the step of producing the above-mentioned optical waveguide section W₂. The thickness of the sheet material 10 is, for example, in the range of 10 to 100 *µ*m, and preferably in the range of 20 to 70 *µ*m from an economic standpoint.

Then, as shown in FIG. 5A, a varnish prepared by dissolving a photosensitive resin such as a photosensitive epoxy resin and the like for the formation of the under cladding layer in a solvent is applied to a surface of the above-mentioned sheet material 10. Thereafter, a heating treatment (at 50 to 120°C for approximately 10 to 30 minutes) is performed on the varnish, as required, to dry the varnish, thereby forming a photosensitive resin layer 1A for the formation of the under cladding layer 1. Then, the photosensitive resin layer 1A is exposed to irradiation light such as ultraviolet light and the like. This causes the photosensitive resin layer 1A to be formed into the under cladding layer 1. The thickness of the under cladding layer 1 is typically in the range of 5 to 100 *µ*m.

Next, as shown in FIG. 5B, a photosensitive resin layer 2A for the formation of the core and the protruding portions having the generally U-shaped plan configuration is formed on the surface of the above-mentioned under cladding layer 1 in a manner similar to the process for forming the above-mentioned photosensitive resin layer 1A for the formation of the under cladding layer. Then, the above-mentioned photosensitive resin layer 2A is exposed to irradiation light through a photomask formed with an opening pattern corresponding to the pattern of the core 2 and the protruding portions 4 having the generally U-shaped plan configuration in a position determined with high precision. Next, a heating treatment is performed. Thereafter, development is performed using a developing solution to dissolve away unexposed portions of the above-mentioned photosensitive resin layer 2A, as shown in FIG. 5C, thereby forming the remaining photosensitive resin layer 2A into the pattern of the core 2 and the protruding portions 4 having the generally U-shaped plan configuration. As described above, the protruding portions 4 having the generally U-shaped plan configuration are formed at the same time as the core 2 by a photolithographic process using the single photomask. For this reason, the protruding portions 4 are formed in an appropriate shape in a position determined with high precision relative to the first end surface 2a of the core 2. Thus, the formation of the pair of protruding portions (the positioning member) 4 having the generally U-shaped plan configuration for the positioning of the substrate section in an appropriate shape in a position determined with high precision relative to the first end surface 2a of the core 2 in the optical waveguide section W₂ is one of the striking characteristics of the present invention.

The thickness (height) of the above-mentioned core 2 and the protruding portions 4 having the generally U-shaped plan configuration is typically in the range of 5 to 100 *µ*m, and preferably in the range of 5 to 60 *µ*m in consideration of the resolution performance of the material in the photolithographic step. The width of the core 2 is typically in the range of 5 to 60 *µ*m . The slit width of the slit portions 4a of the protruding portions 4 having the generally U-shaped plan configuration is set at a value slightly greater than the thickness of the positioning plate portions 5a of the substrate section E₂ to be positioned in the slit portions 4a, and is typically in the range of 20 to 200 *µ*m . The width of the lines forming the generally U-shaped plan configuration is typically in the range of 10 to 2000 *µ*m. The pair of protruding portions 4 are equally spaced apart from the first end surface 2a of the core 2. A distance between a line connecting the pair of protruding portions 4 and the first end surface 2a of the core 2 is typically in the range of 0.3 to 1.5 mm, depending on the size of the optical element and the like. A distance between the pair of protruding portions 4 is typically in the range of 3 to 20 mm.

Amaterial for the formation of the above-mentioned core 2 and the protruding portions 4 having the generally U-shaped plan configuration includes, for example, a photosensitive resin similar to that for the above-mentioned under cladding layer 1, and the material used herein has a refractive index greater than that of the material for the formation of the above-mentioned under cladding layer 1 and the over cladding layer 3 (with reference to FIG. 6B) . The adjustment of this refractive index may be made, for example, by adjusting the selection of the types of the materials for the formation of the above-mentioned under cladding layer 1, the core 2 and the over cladding layer 3, and the composition ratio thereof.

Next, a molding die 30 (with reference to FIG. 6A) is prepared. This molding die 30 is used to die-mold the over cladding layer 3 (with reference to FIG. 6C) and the extensions 3a of the over cladding layer 3 which have the groove portions 3b for fitting engagement with the substrate section (with reference to FIG. 6C) at the same time. The lower surface of this molding die 30 is formed with a first recessed portion 31 having a die surface complementary in shape to the above-mentioned over cladding layer 3, and a second recessed portion 32 in which the protruding portions 4 having the generally U-shaped plan configuration are to be inserted, as shown in FIG. 6A that is a perspective view as viewed from below. The above-mentioned first recessed portion 31 includes portions 31a for the formation of the above-mentioned extensions 3a, and a portion 31b for the formation of the lens portion 3c (with reference to FIG. 6C). Ridges 33 for the molding of portions of the groove portions 3b for fitting engagement with the above-mentioned substrate section are formed in the portions 31a for the formation of the above-mentioned extensions. Also, the upper surface of the above-mentioned molding die 30 is formed with alignment marks (not shown) for the purpose of alignment with the first end surface 2a (the right-hand end surface as seen in FIG. 6B) of the core 2 for the appropriate positioning of the molding die 30 when in use. The above-mentioned first recessed portion 31 and the ridges 33 are formed in appropriate positions with respect to the alignment marks.

Thus, when the above-mentioned molding die 30 is set after the alignment marks of the above-mentioned molding die 30 are aligned with the first end surface 2a of the core 2, and is used to perform the molding in that state, the over cladding layer 3 and the groove portions 3b for fitting engagement with the substrate section are allowed to be die-molded at the same time in appropriate positions with respect to the first end surface 2a of the core 2. Also, the above-mentioned molding die 30 is set by bringing the lower surface of the molding die 30 into intimate contact with the surface of the under cladding layer 1, whereby the space surrounded by the die surfaces of the above-mentioned first recessed portion 31, the surface of the under cladding layer 1 and the surface of the core 2 is defined as a mold space 34 (with reference to FIG. 6B). Further, the above-mentioned molding die 30 is further formed with an inlet (not shown) for the injection of a resin for the formation of the over cladding layer therethrough into the above-mentioned mold space 34, the inlet being in communication with the above-mentioned first recessed portion 31.

An example of the above-mentioned resin for the formation of the over cladding layer includes a photosensitive resin similar to that for the above-mentioned under cladding layer 1. In this case, it is necessary that the photosensitive resin that fills the above-mentioned mold space 34 be exposed to irradiation light such as ultraviolet light and the like directed through the above-mentioned molding die 30. For this reason, a molding die made of a material permeable to the irradiation light (for example, a molding die made of quartz) is used as the above-mentioned molding die 30. It should be noted that a thermosetting resin may be used as the resin for the formation of the over cladding layer. In this case, the above-mentioned molding die 30 may have any degree of transparency. For example, a molding die made of metal or quartz is used as the above-mentioned molding die 30.

Then, as shown in FIG. 6B, the alignment marks of the molding die 30 are aligned with the first end surface 2a of the above-mentioned core 2 so that the entire molding die 30 is appropriately positioned. In that state, the lower surface of the molding die 30 is brought into intimate contact with the surface of the under cladding layer 1. In this state, the protruding portions 4 having the generally U-shaped plan configuration are inserted in the second recessed portion 32 of the molding die 30. Then, the resin for the formation of the over cladding layer is injected through the inlet formed in the above-mentioned molding die 30 into the mold space 34 surrounded by the die surfaces of the above-mentioned first recessed portion 31 and the ridges 33, the surface of the under cladding layer 1 and the surface of the core 2 to fill the above-mentioned mold space 34 therewith. Next, when the resin is the photosensitive resin, exposure to irradiation light such as ultraviolet light is performed through the above-mentioned molding die 30, and thereafter a heating treatment is performed. When the above-mentioned resin is the thermosetting resin, a heating treatment is performed. This hardens the above-mentioned resin for the formation of the over cladding layer to form the groove portions 3b for fitting engagement with the substrate section (the extensions 3a of the over cladding layer 3) at the same time as the over cladding layer 3. When the under cladding layer 1 and the over cladding layer 3 are made of the same material, the under cladding layer 1 and the over cladding layer 3 are integrated together at the contact portions thereof. Then, the molding die 30 is removed. As shown in FIG. 6C, the over cladding layer 3 and the pair of groove portions 3b for fitting engagement with the substrate section are provided.

The groove portions 3b for fitting engagement with the substrate section are positioned in an appropriate location relative to the first end surface 2a of the core 2 because the groove portions 3b are formed with respect to the first end surface 2a of the core 2 by using the above-mentioned molding die 30, as mentioned earlier. Also, the lens portion 3c of the above-mentioned over cladding layer 3 is also positioned in an appropriate location. Thus, the precise formation of the groove portions (fitting portions) 3b for fitting engagement with the substrate section in the appropriate position relative to the first end surface 2a of the core 2 in the optical waveguide section W₂ is one of the striking characteristics of the present invention. However, the substrate section E₂ is positioned, as mentioned earlier, by the use of the above-mentioned protruding portions 4 having the generally U-shaped plan configuration, and the above-mentioned fitting portions 3b are provided to hold the above-mentioned substrate section E₂. Thus, the production of the above-mentioned molding die 30 does not require a high level of machining accuracy. The costs of the molding die 30 are accordingly reduced.

The thickness of the above-mentioned over cladding layer 3 (the thickness as measured from the surface of the under cladding layer 1) is typically in the range of 0.5 to 3 mm. The size of the above-mentioned groove portions 3b for fitting engagement with the substrate section is defined in corresponding relation to the size of the fitting plate portions 5b of the substrate section E₂ for fitting engagement therewith. For example, the depth (the dimension along the X-axis as seen in FIG. 2A) of the grooves is in the range of 1.0 to 5.0 mm, and the width of the grooves is in the range of 0.2 to 2.0 mm.

Thereafter, as shown in FIG. 6D, the through hole 20 for insertion of the substrate section E₂ is formed in a portion of the laminate comprised of the sheet material 10 and the under cladding layer 1 lying between the pair of protruding portions 4 having the generally U-shaped plan configuration for the positioning of the above-mentioned substrate section by using a puncher and the like. In this manner, the optical waveguide section W₂ is provided which includes the under cladding layer 1, the core 2 and the over cladding layer 3 on the surface of the sheet material 10 and which is formed with the pair of protruding portions 4 having the generally U-shaped plan configuration for the positioning of the substrate section and the pair of groove portions 3b for fitting engagement with the substrate section. Thus, the above-mentioned step (1) of producing the optical waveguide section W₂ is completed.

Next, the above-mentioned step (2) of producing the substrate section E₂ will be described. First, a substrate 5A (with reference to FIG. 7A) serving as a base material of the above-mentioned shaping substrate 5 is prepared. Examples of a material for the formation of the substrate 5A include metal, resin and the like. In particular, the substrate 5A made of stainless steel is preferable from the viewpoint of easy processibility and dimensional stability. The thickness of the above-mentioned substrate 5A is, for example, in the range of 0.02 to 0.1 mm.

Then, as shown in FIG. 7A, a varnish prepared by dissolving a photosensitive resin for the formation of the insulation layer such as a photosensitive polyimide resin and the like in a solvent is applied to a predetermined region of the surface of the above-mentioned substrate 5A. Thereafter, a heating treatment is performed on the varnish, as required, to dry the varnish, thereby forming a photosensitive resin layer for the formation of the insulation layer. Then, the photosensitive resin layer is exposed to irradiation light such as ultraviolet light and the like through a photomask. This causes the photosensitive resin layer to be formed into the insulation layer 6 having a predetermined shape. The thickness of the insulation layer 6 is typically in the range of 5 to 15 *µ*m.

Next, as shown in FIG. 7B, the optical element mounting pad 7 and the electric circuit (not shown) for connection to the optical element mounting pad 7 are formed on the surface of the above-mentioned insulation layer 6. The formation of the mounting pad (including the electric circuit) 7 is achieved, for example, in a manner to be described below. Specifically, a metal layer (having a thickness on the order of 60 to 260 nm) is initially formed on the surface of the above-mentioned insulation layer 6 by sputtering, electroless plating and the like. This metal layer becomes a seed layer (a layer serving as a basis material for the formation of an electroplated layer) for a subsequent electroplating process. Then, a dry film resist is affixed to the opposite surfaces of a laminate comprised of the above-mentioned substrate 5A, the insulation layer 6, and the seed layer. Thereafter, a photolithographic process is performed in the dry film resist on the side where the above-mentioned seed layer is formed, so that surface portions of the above-mentioned seed layer are uncovered at the bottoms of the hole portions. Next, electroplating is performed to form an electroplated layer (having a thickness on the order of 5 to 20 *µ*m) in a stacked manner on the surface portions of the above-mentioned seed layer uncovered at the bottoms of the above-mentioned hole portions. Then, the above-mentioned dry film resist is stripped away using an aqueous sodium hydroxide solution and the like. Thereafter, a seed layer portion on which the above-mentioned electroplated layer is not formed is removed by soft etching, so that a laminate portion comprised of the remaining electroplated layer and the underlying seed layer is formed into the mounting pad (including the electric circuit) 7.

Then, as shown in FIG. 7C, the above-mentioned substrate 5A is formed into the shaping substrate 5 having the positioning plate portions 5a and the fitting plate portions 5b in the appropriate positions relative to the mounting pad 7. The formation of the shaping substrate 5 is achieved, for example, in a manner to be described below. Specifically, the back surface of the above-mentioned substrate 5A is covered with a dry film resist. A photolithographic process is performed to leave portions of the dry film resist having an intended shape unremoved so that the positioning plate portions 5a and the fitting plate portions 5b are formed in the appropriate positions relative to the mounting pad 7. Then, uncovered portions of the substrate 5A except where the portions of the dry film resist are left unremoved are etched away by using an aqueous ferric chloride solution. This causes the above-mentioned substrate 5A to be formed into the shaping substrate 5 having the positioning plate portions 5a and the fitting plate portions 5b. Then, the above-mentioned dry film resist is stripped away using an aqueous sodium hydroxide solution and the like. The size of the above-mentioned positioning plate portions 5a is, for example, as follows: a vertical dimension L₁ in the range of 0.1 to 1.0 mm; and a horizontal dimension L₂ in the range of 1.0 to 5.0 mm. The size of the fitting plate portions 5b is, for example, as follows: a vertical dimension L₃ in the range of 0.5 to 2.0 mm; and a horizontal dimension L₄ in the range of 1.0 to 5.0 mm. Thus, the precise formation of the positioning plate portions (to-be-positioned portions) 5a and the fitting plate portions (to-be-fitted portions) 5b in the appropriate positions relative to the mounding pad 7 in the substrate section E₂ is one of the striking characteristics of the present invention.

Then, as shown in FIG. 7D, the optical element 8 is mounted on the mounting pad 7, and thereafter the above-mentioned optical element 8 and its surrounding portion are sealed with a transparent resin by potting. The mounting of the above-mentioned optical element 8 is performed using a mounting machine after the optical element 8 is precisely positioned relative to the mounting pad 7 by using a positioning device such as a positioning camera and the like provided in the mounting machine. In this manner, the substrate section E₂ is provided which includes the shaping substrate 5 having the positioning plate portions 5a and the fitting plate portions 5b, the insulation layer 6, the mounting pad 7, the optical element 8, and the transparent resin layer 9. Thus, the above-mentioned step (2) of producing the substrate section E₂ is completed. In the substrate section E₂, the positioning plate portions 5a and the fitting plate portions 5b are formed with respect to the mounting pad 7, as mentioned earlier. Accordingly, the optical element 8 mounted on the mounting pad and the positioning plate portions 5a and the fitting plate portions 5b are in an appropriate positional relationship.

Next, the above-mentioned step (3) of coupling the optical waveguide section W₂ and the substrate section E₂ together will be described. Specifically, the surface (the light-emitting section or the light-receiving section) of the optical element 8 of the substrate section E₂ (with reference to FIGS. 4 and 7D) is directed to face toward the first end surface 2a of the core 2 of the optical waveguide section W₂ (with reference to FIG. 3). In that state, the positioning plate portions 5a in the above-mentioned substrate section E₂ are positioned by bringing the positioning plate portions 5a into abutment with the inside surfaces of the pair of protruding portions 4 having the generally U-shaped plan configuration in the optical waveguide section W₂ for the positioning of the substrate section, and the fitting plate portions 5b in the above-mentioned substrate section E₂ are brought into fitting engagement with the pair of groove portions 3b in the optical waveguide section W₂ for fitting engagement with the substrate section, whereby the above-mentioned optical waveguide section W₂ and the substrate section E₂ are integrated together (with reference to FIGS. 1, 2A and 2B). At this time, the lower end edges of the positioning plate portions 5a are placed into abutment with the surface of the above-mentioned under cladding layer 1. It should be noted that at least either the positioning portions of the above-mentioned protruding portions 4 and the positioning plate portions 5a or the fitting engagement portions of the groove portions 3b and the fitting plate portions 5b may be fixed with an adhesive. Such fixing with an adhesive allows the positional relationship between the above-mentioned optical waveguide section W₂ and the substrate section E₂ to be maintained with higher stability against impacts, vibrations and the like. In this manner, the intended optical sensor module is completed.

In the above-mentioned optical waveguide section W₂, as mentioned earlier, the first end surface 2a of the core 2 and the protruding portions 4 for the positioning of the substrate section are in a highly precise positional relationship, and the first end surface 2a of the core 2 and the groove portions 3b for fitting engagement with the substrate section are in an appropriate positional relationship. In the substrate section E₂ with the above-mentioned optical element 8 mounted therein, the optical element 8 and the positioning plate portions 5a to be positioned in the protruding portions 4 are in an appropriate positional relationship, and the optical element 8 and the fitting plate portions 5b for fitting engagement with the above-mentioned groove portions 3b are also in an appropriate positional relationship. As a result, in the above-mentioned optical sensor module configured such that the above-mentioned positioning plate portions 5a are positioned in the above-mentioned protruding portions 4 and such that the above-mentioned fitting plate portions 5b are in fitting engagement with the above-mentioned groove portions 3b, the first end surface 2a of the core 2 and the optical element 8 are automatically placed in a highly precise positional relationship without any alignment operation. This enables the above-mentioned optical sensor module to achieve the appropriate propagation of light between the end surface 2a of the core 2 and the optical element 8. As a result, the optical element 8 need not necessarily be a high-power optical element. The costs of the optical element 8 are accordingly reduced. Thus, positioning the first end surface 2a of the core 2 and the optical element 8 relative to each other with high accuracy by positioning the positioning plate portions (to-be-positioned portions) 5a of the above-mentioned substrate section E₂ in the protruding portions (the positioning member) 4 of the optical waveguide section W₂ for the positioning of the substrate section and by bringing the fitting plate portions (to-be-fitted portions) 5b of the above-mentioned substrate section E₂ into fitting engagement with the groove portions (fitting portions) 3b of the optical waveguide section W₂ for fitting engagement with the substrate section is one of the striking characteristics of the present invention.

In this embodiment, the protruding portions 4 in the optical waveguide section W₂ for the positioning of the substrate section are formed to have the generally U-shaped plan configuration. However, if the positioning of the substrate section E₂ is achieved, the protruding portions 4 may have other configurations. For example, the protruding portions 4 may have an L-shaped plan configuration that is a portion of the above-mentioned generally U-shaped plan configuration.

Also, in the above-mentioned embodiment, the coupling between the optical waveguide section W₂ and the substrate section E₂ is provided typically using an auxiliary device such as an optical microscope and the like because the slit width of the protruding portions 4 and the groove width of the groove portions 3b are narrow.

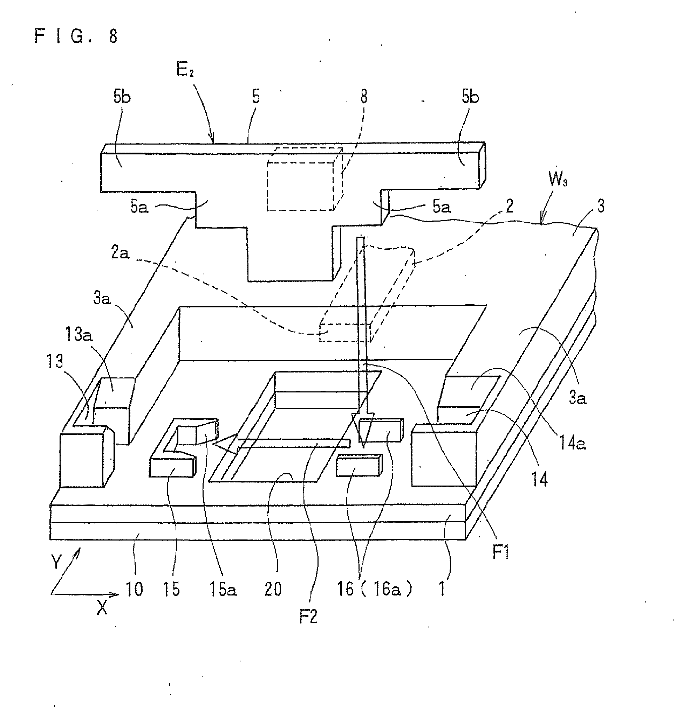

FIG. 8 is a perspective view schematically showing a first end portion of an optical waveguide section of an optical sensor module according to a second embodiment of the present invention. The optical sensor module according to the second embodiment is configured such that an optical waveguide section W₃ includes a pair of first and second groove portions 13 and 14 formed with respective tapered portions 13a and 14a, and a pair of first and second protruding portions 15 and 16, the first (left-hand as seen in the figure) protruding portion 15 being formed with a tapered portion 15a, the second (right-hand as seen in the figure) protruding portion 16 being formed as a guide portion comprised of two parallel strips 16a, so that the positioning of the substrate section E₂ is easier in the optical sensor module according to the first embodiment shown in FIG. 1. Other parts are similar to those of the first embodiment shown in FIG. 1. Like reference numerals and characters are used to designate similar parts.

More specifically, portions of the pair of above-mentioned groove portions 13 and 14 corresponding to an upper surface portion of the over cladding layer 3 are the tapered portions 13a and 14a having a width decreasing gradually in a downward direction from the upper surface of the over cladding layer 3. The tapered portions 13a and 14a extend partway in the longitudinal direction of the groove portions 13 and 14 (in the direction of the thickness of the over cladding layer 3). Portions of the groove portions 13 and 14 below the tapered portions 13a and 14a have a uniform width, as in the first embodiment shown in FIG. 1. The position of the lower end of the tapered portions 13a and 14a is preferably level with or above the position in which the lower end edges of the fitting plate portions 5b of the substrate section E₂ lie when the optical waveguide section W₃ and the substrate section E₂ are coupled together. The width of the above-mentioned tapered portions 13a and 14a at their upper ends (at the upper surface of the over cladding layer 3) is, for example, in the range of 1.0 to 3.0 mm from the viewpoint of attaining such size as to enable an operator to easily bring the fitting plate portions 5b of the substrate section E₂ into fitting engagement with the tapered portions 13a and 14a through visual observation. The widths of the lower end of the tapered portions 13a and 14a and the portions of the uniform width below the tapered portions 13a and 14a are, for example, in the range of 0.2 to 0.4 mm. Further, in the second embodiment, the depth of the second (right-hand as seen in the figure) groove portion 14 is approximately 1.0 to 3.0 mm greater than that of the first (left-hand as seen in the figure) groove portion 13.

Of the pair of above-mentioned protruding portions 15 and 16, the first (left-hand as seen in the figure) protruding portion 15 is formed in a generally U-shaped plan configuration, and has an generally U-shaped opening portion in the form of the tapered portion 15a having a width decreasing gradually in an inward direction from the opening end thereof. The tapered portion 15a extends partway in the inward direction of the generally U-shaped configuration. A portion of the groove portion 15 inside the tapered portion 15a has a uniform width, as in the first embodiment shown in FIG. 1. Preferably, the opening width of the opening end of the above-mentioned tapered portion 15a is slightly greater than the width (0.2 to 0.4 mm) of the lower ends of the tapered portions 13a and 14a of the above-mentioned groove portions 13 and 14. The widths of the inside end of the tapered portion 15a of the above-mentioned protruding portion 15 and the portion of the uniform width inside the tapered portion 15a are, for example, approximately 0.1 mm, and the lengths thereof are, for example, approximately 1.0 mm. The width of the lines forming the generally U-shaped plan configuration is typically in the range of 0.05 to 0.2 mm.

On the other hand, the second (right-hand as seen in the figure) protruding portion 16 is formed as the guide portion comprised of the two parallel strips 16a. Preferably, the spacing between the two strips 16a is slightly greater than the width (0.2 to 0.4 mm) of the lower ends of the tapered portions 13a and 14a of the above-mentioned groove portions 13 and 14. Preferably, the length of the two above-mentioned strips 16a is, for example, not less than 1.0 mm.

The optical waveguide section W₃ and the substrate section E₂ are coupled to each other in a manner to be described below. First, the surface of the optical element 8 of the substrate section E₂ is directed to face toward the first end surface 2a of the core 2 of the optical waveguide section W₃. In that state, the substrate section E₂ is moved slightly toward the groove portion (the right-hand groove portion as seen in the figure) 14 having the greater depth, and the fitting plate portions 5b of the substrate section E₂ are positioned over the groove portions 13 and 14 of the optical waveguide section W₃. Then, the substrate section E₂ is moved downwardly (as indicated by the arrow F1 in the figure). The fitting plate portions 5b of the substrate section E₂ are inserted into the tapered portions 13a and 14a of the groove portions 13 and 14, and the lower end edges of the positioning plate portions 5a of the substrate section E₂ are brought into abutment with the surface of the above-mentioned under cladding layer 1. At this time, the position of the substrate section E₂ along the Y-axis is coarsely adjusted by the tapered portions 13a and 14a of the above-mentioned groove portions 13 and 14, and the lower end edges of the positioning plate portions 5a of the substrate section E₂ are positioned between the two parallel strips 16a of the second (right-hand as seen in the figure) protruding portion 16. Next, the substrate section E₂ is slid toward the groove portion 13 (left-hand as seen in the figure) having the smaller depth (as indicated by the arrow F2 in the figure). The left-hand end edge of the positioning plate portions 5a of the substrate section E₂ is inserted into the tapered portion 15a of the first (left-hand as seen in the figure) protruding portion 15, and is brought into abutment with the inside end surface of the protruding portion 15. At this time, the position of the substrate section E₂ along the Y-axis is appropriately adjusted by the tapered portion 15a of the above-mentioned protruding portion 15, and the position thereof along the X-axis is appropriately adjusted by the abutment against the above-mentioned inside end surface. In this manner, the optical waveguide section W₃ and the substrate section E₂ are integrated together to provide an optical sensor module.

In the second embodiment, the taperedportions 13a, 14a and 15a are formed in the groove portions 13 and 14, and the protruding portion 15, respectively. This provides the coupling between the optical waveguide section W₃ and the substrate section E₂ without using an auxiliary device such as an optical microscope and the like.

In the second embodiment, the tapered portions 13a and 14a of the groove portions 13 and 14 extend partway in the longitudinal direction of the groove portions 13 and 14. However, when the lower end edges of the fitting plate portions 5b for fitting engagement with the groove portions 13 and 14 come in abutment with the surface of the under cladding layer 1, the tapered portions 13a and 14a of the groove portions 13 and 14 may extend to the lower ends of the groove portions 13 and 14 (to the surface of the under cladding layer 1).

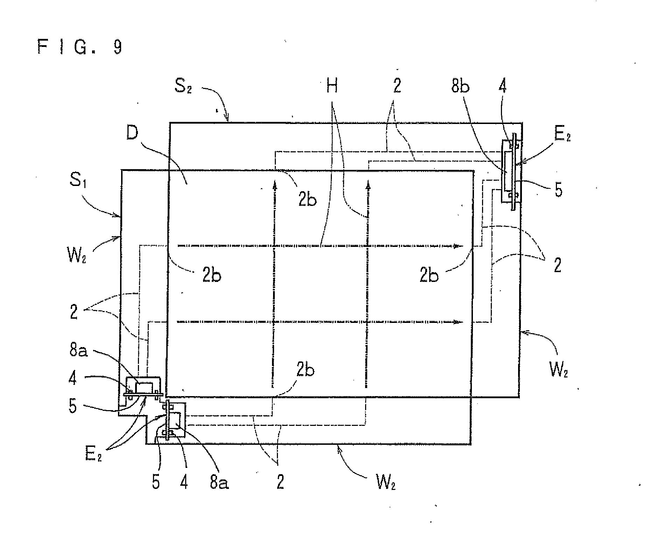

The above-mentioned optical sensor module according to the present invention may be used as a detection means for detecting a finger touch position and the like on a touch panel. This is done, for example, by forming two L-shaped optical sensor modules S₁ and S₂ and using the two L-shaped optical sensor modules S₁ and S₂ opposed to each other in the form of a rectangular frame, as shown in FIG. 9. Specifically, the first L-shaped optical sensor module S₁ is configured such that two substrate sections E₂ with respective light-emitting elements 8a such as semiconductor lasers and the like mounted therein are in fitting engagement with a corner portion thereof, and such that the second end surfaces 2b of cores 2 and the lens surface of the over cladding layer 3 from which light beams H are emitted face toward the inside of the above-mentioned frame. The second L-shaped optical sensor module S₂ is configured such that a single substrate sections E₂ with a light-receiving elements 8b such as a photodiode and the like mounted therein is in fitting engagement with a corner portion thereof, and such that the lens surface of the over cladding layer 3 and the second end surfaces 2b of cores 2 which receive the light beams H face toward the inside of the above-mentioned frame. The above-mentioned two L-shaped optical sensor modules S₁ and S₂ are arranged along the rectangle of the periphery of a display screen of a rectangular display D of the touch panel so as to surround the display screen, so that the light beams H emitted from the first L-shaped optical sensor module S₁ are received by the second L-shaped optical sensor module S₂. This allows the above-mentioned emitted light beams H to travel in parallel with the display screen and in a lattice form on the display screen of the display D. When a portion of the display screen of the display D is touched with a finger, the finger blocks some of the emitted light beams H. Thus, the light-receiving element 8b senses a light blocked portion, whereby the position of the above-mentioned portion touched with the finger is detected. In FIG. 9, the cores 2 are indicated by broken lines, and the thickness of the broken lines indicates the thickness of the cores 2. Also, the number of cores 2 is shown as abbreviated.

In the above-mentioned embodiments, the insulation layer 6 is formed for the production of the substrate sections E₂. This insulation layer 6 is provided for the purpose of preventing a short circuit from occurring between the substrate 5A having electrical conductivity such as a metal substrate and the mounting pad 7. For this reason, when the substrate 5A has insulating properties, the mounting pad 7 may be formed directly on the above-mentioned substrate 5A without the formation of the insulation layer 6.

In the above-mentioned embodiments, the second end portion (the left-hand end portion as seen in FIG. 2B) of the over cladding layer 3 is formed as the lens portion 3c. Instead, the second end portion of the over cladding layer 3 may be formed in a planar configuration, rather than as the lens portion 3c, depending on the application of the optical sensor module.

Next, inventive examples of the present invention will be described in conjunction with a comparative example. The present invention is not limited to the inventive examples.

### Examples

### Material for Formation of Under Cladding Layer and Over Cladding Layer (Including Extensions)

A material for the formation of an under cladding layer and an over cladding layer was prepared by mixing 35 parts by weight of bisphenoxyethanolfluorene diglycidyl ether (component A), 40 parts by weight of 3ʹ ,4ʹ-epoxycyclohexyl-methyl 3,4-epoxycyclohexanecarboxylate which was an alicyclic epoxy resin (CELLOXIDE 2021P manufactured by Daicel Chemical Industries, Ltd.) (component B), 25 parts by weight of (3ʹ ,4ʹ-epoxycyclohexane)methyl-3ʹ,4ʹ -epoxycyclohexyl carboxylate (CELLOXIDE 2081 manufactured by Daicel Chemical Industries, Ltd.) (component C), and 2 parts by weight of a 50% by weight propione carbonate solution of 4,4ʹ-bis[di(ß-hydroxyethoxy) phenylsulfinio] phenylsulfide bishexafluoroantimonate (component D).

### Material for Formation of Core and Protruding Portions

A material for the formation of a core and protruding portions was prepared by dissolving 70 parts by weight of the aforementioned component A, 30 parts by weight of 1,3,3-tris{4-[2-(3-oxetanyl)]butoxyphenyl}butane and one part by weight of the aforementioned component D in ethyl lactate.

### Inventive Example 1

### Production of Optical Waveguide Section

The material for the formation of the above-mentioned under cladding layer was applied to a surface of a sheet material made of stainless steel (having a thickness of 50 *µ*m) with an applicator. Thereafter, exposure by the use of irradiation with ultraviolet light (having a wavelength of 365 nm) at 2000 mJ/cm² was performed, to thereby form the under cladding layer (having a thickness of 20 *µ*m) (with reference to FIG. 5A).

Then, the material for the formation of the above-mentioned core and the protruding portions was applied to a surface of the above-mentioned under cladding layer with an applicator. Thereafter, a drying process was performed at 100°C for 15 minutes to form a photosensitive resin layer (with reference to FIG. 5B). Next, a synthetic quartz chrome mask (photomask) formed with an opening pattern identical in shape with the pattern of the core and the protruding portions were placed over the photosensitive resin layer. Then, exposure by the use of irradiation with ultraviolet light (having a wavelength of 365 nm) at 4000 mJ/cm² was performed by a proximity exposure method from over the mask. Thereafter, a heating treatment was performed at 80°C for 15 minutes. Next, development was carried out using an aqueous solution of *γ*-butyrolactone to dissolve away unexposed portions. Thereafter, a heating treatment was performed at 120°C for 30 minutes to thereby form the core of a rectangular sectional configuration (having a thickness of 50 *µ*m and a width of 150 *µ*m) , and the pair of protruding portions of a generally U-shaped plan configuration (having a thickness of 50 *µ*m, and including a slit portion of a generally U-shaped plan configuration with a slit width of 0.1 mm and lines of a generally U-shaped plan configuration with a width of 0.2 mm). The pair of protruding portions were equally spaced apart from a first end surface of the core. A distance between a line connecting the pair of protruding portions and the first end surface of the core was 0.3 mm, and a distance between the pair of protruding portions was 8 mm (with reference to FIG. 5C).

Next, a molding die made of quartz (with reference to FIG. 6A) for the die-molding of the over cladding layer and groove portions for fitting engagement with a substrate section (the extensions of the over cladding layer) at the same time was set in an appropriate position by using the first end surface of the core as a reference (with reference to FIG. 6B). Then, the material for the formation of the above-mentioned over cladding layer and the extensions thereof was injected into a mold space. Thereafter, exposure by the use of irradiation with ultraviolet light at 2000 mJ/cm² was performed through the molding die. Subsequently, a heating treatment was performed at 120°C for 15 minutes. Thereafter, the die was removed. This provided the over cladding layer (having a thickness of 1mm as measured from the surface of the under cladding layer), and the groove portions for fitting engagement with the substrate section (with reference to FIG. 6C). The above-mentioned groove portions had the following dimensions: a depth of 1.5 mm, a width of 0.2 mm, and a distance of 14.0 mm between the bottom surfaces of the groove portions opposed to each other.

### Production of Substrate Section

An insulation layer (having a thickness of 10 *µ*m ) made of a photosensitive polyimide resin was formed on a portion of a surface of a stainless steel substrate [25 mm x 30 mm x 50 *µ*m (thick)] (with reference to FIG. 7A). Then, a semi-additive process was performed to form a seed layer made of copper/nickel/chromium alloy, and an electro copper plated layer (having a thickness of 10 *µ*m) in a stacked manner on a surface of the above-mentioned insulation layer. Further, a gold/nickel plating process (gold/nickel = 0.2/2 *µ*m) was performed to form an optical element mounting pad, a second bonding pad, and an electric circuit (with reference to FIG. 7B).

Next, etching was performed using a dry film resist so that positioning plate portions and fitting plate portions were formed in an appropriate position relative to the above-mentioned optical element mounting pad. This caused the stainless steel substrate portion to be formed into a shaping substrate having positioning plate portions and the fitting plate portions. Thereafter, the above-mentioned dry film resist was stripped away using an aqueous sodium hydroxide solution (with reference to FIG. 7C).

A silver paste was applied to a surface of the above-mentioned optical element mounting pad. Thereafter, a high-precision die bonder (mounting apparatus) was used to mount a light-emitting element of a wire bonding type (a VCSEL chip SM85-2N001 manufactured by Optowell Co., Ltd.) onto the above-mentioned silver paste. Then, a curing process (at 180°C for one hour) was performed to harden the above-mentioned silver paste. Thereafter, gold wires having a diameter of 25 *µ*m were used to form gold wire loops by wire bonding, and the above-mentioned light-emitting element and its surrounding portion were sealed with a transparent resin (NT resin manufactured by Nitto Denko Corporation) for an LED by potting (with reference to FIG. 7D). In this manner, the substrate section was produced. The size of the positioning plate portions of the substrate section was defined in accordance with the size of the above-mentioned pair of protruding portions, and the size of the fitting plate portions was defined in accordance with the size of the above-mentioned pair of groove portions.

### Manufacture of Optical Sensor Module

First, the substrate section was held with tweezers. Under observation with an optical microscope, the positioning plate portions in the above-mentioned substrate section were positioned by bringing the positioning plate portions into abutment with the inside surfaces of the protruding portions having the generally U-shaped plan configuration in the above-mentioned optical waveguide section for the positioning of the substrate section, and the fitting plate portions in the above-mentioned substrate section were brought into fitting engagement with the pair of groove portions in the optical waveguide section for fitting engagement with the substrate section, so that the lower end edges of the above-mentioned positioning plate portions were placed into abutment with the surface of the above-mentioned under cladding layer. Thereafter, the positioning portions and the fitting engagement portions were fixed with an adhesive. In this manner, an optical sensor module was manufactured (with reference to FIGS. 1, 2A and 2B).

### Inventive Example 2

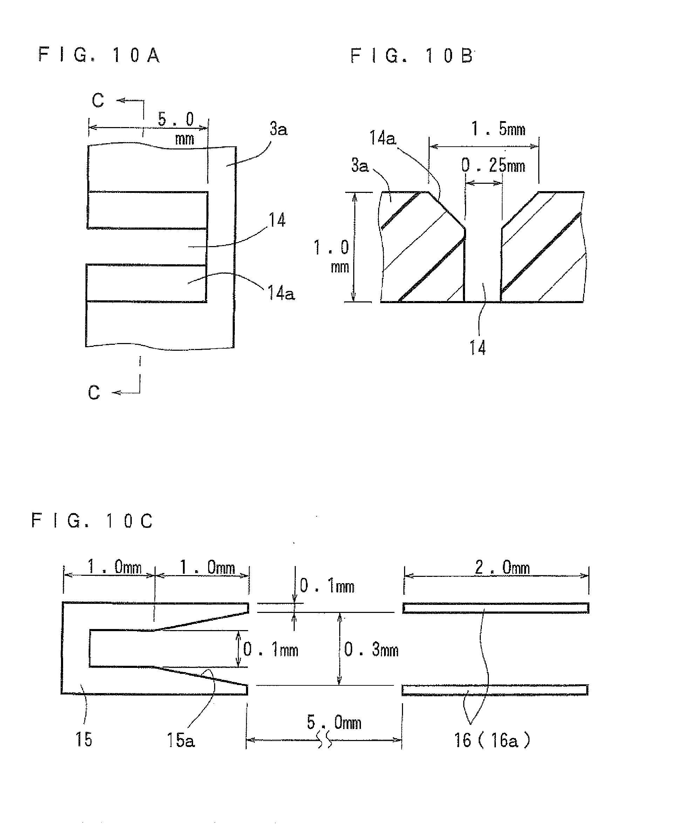

Portions of the pair of groove portions corresponding to an upper surface portion of the over cladding layer in Inventive Example 1 described above were formed as tapered portions (with reference to FIG. 8). The dimensions of the groove portions were shown in FIGS. 10A and 10B. FIGS. 10A and 10B showed the groove portion 14 having the greater depth (a depth of 5.0 mm). The groove portion 13 having the smaller depth (with reference to FIG. 8) had a depth of 3. 0 mm. The remaining dimensions of the groove portion 13 were similar to those of the groove portion 14 having the greater depth. Of the pair of protruding portions 15 and 16, as shown in FIG. 10C, the protruding portion (left-hand as seen in the figure) 15 closer to the grove portion 13 having the smaller depth was formed in a generally U-shaped plan configuration, and had a generally U-shaped opening portion in the form of the tapered portion 15a, whereas the protruding portion (right-hand as seen in the figure) 16 closer to the groove portion 14 having the greater depth was formed as a guide portion comprised of the two parallel strips 16a. The dimensions of the protruding portions 15 and 16 are also shown in FIG. 10C.

### Manufacture of Optical Sensor Module

First, the substrate section was held with operator's fingertips. The substrate section was moved slightly toward the groove portion 14 having the greater depth, and the fitting plate portions of the substrate section were positioned over the groove portions 13 and 14 or the optical waveguide section (with reference to FIG. 8). Then, the substrate section was moved downwardly. The fitting plate portions of the substrate section were inserted into the tapered portions 13a and 14a of the groove portions 13 and 14, and the lower end edges of the positioning plate portions of the substrate section were brought into abutment with the surface of the above-mentioned under cladding layer. At this time, the position of the substrate section along the Y-axis was coarsely adjusted by the tapered portions 13a and 14a of the above-mentioned groove portions 13 and 14, and the lower end edges of the positioning plate portions of the substrate section were positioned between the two parallel strips 16a of the second (right-hand as seen in the figure) protruding portion 16. Next, the substrate section was slid toward the groove portion 13 having the smaller depth. The left-hand end edge of the positioning plate portions of the substrate section was inserted into the tapered portion 15a of the first (left-hand as seen in the figure) protruding portion 15, and was brought into abutment with the inside end surface of the protruding portion 15. At this time, the position of the substrate section along the Y-axis was appropriately adjusted by the tapered portion 15a of the above-mentioned protruding portion 15, and the position thereof along the X-axis was appropriately adjusted by the abutment against the above-mentioned inside end surface. Thereafter, the positioning portions and the fitting engagement portions were fixed with an adhesive. In this manner, an optical sensor module was manufactured (with reference to FIG. 8). No optical microscope was used for the coupling between the optical waveguide section and the substrate section.

### Comparative Example

The pair of protruding portions having the generally U-shaped plan configuration in the optical waveguide section for the positioning of the substrate section in Inventive Example 1 described above were not formed. Instead, the molding die for use in the die-molding of the over cladding layer and the groove portions for fitting engagement with the substrate section was produced with a higher level of machining accuracy than that in Inventive Example 1. Also, the positioning plate portions were not formed in the substrate section. The fitting plate portions in the above-mentioned substrate section were brought into fitting engagement with the pair of groove portions in the optical waveguide section for fitting engagement with the substrate section, so that the lower end edges of the above-mentioned fitting plate portions were placed into abutment with the surface of the above-mentioned under cladding layer. Thereafter, the fitting engagement portions were fixed with an adhesive. In this manner, an optical sensor module was manufactured.

### Optical Coupling Loss

Current was fed through the light-emitting element of the optical sensor module in Inventive Examples 1 and 2 and Comparative Example described above to cause the light-emitting element to emit light. Then, the intensity of the light emitted from an end portion of the optical sensor module was measured, and an optical coupling loss was calculated. As a result, the optical coupling loss was 0.5 dB in Inventive Examples 1 and 2, and was 3.0 dB in Comparative Example.

This result shows that the manufacturing method in any one of Inventive Examples 1 and 2 and Comparative Example described above allows the optical sensor module obtained thereby to propagate light without any alignment operation of the core of the optical waveguide section and the light-emitting element of the substrate section. However, it is found that the optical sensor modules in Inventive Examples 1 and 2 achieve smaller optical coupling losses and are hence better.

### Time Required for Positioning

It took 20 seconds to provide the coupling between the optical waveguide section and the substrate section in Inventive Example 1 and Comparative Example described above, and it took five seconds in Inventive Example 2 described above.

This result shows that Inventive Example 2 described above, in which the above-mentioned tapered portions are formed in the groove portions and in the protruding portion, is capable of providing the coupling between the optical waveguide section and the substrate section without using any auxiliary device such as an optical microscope and the like and yet quickly. In other words, Inventive Example 2 provides excellent productivity.

Further, a result similar to that described above was achieved when the protruding portions for the positioning of the substrate section were formed to have an L-shaped plan configuration that was a portion of the generally U-shaped plan configuration in place of the generally U-shaped plan configuration in Inventive Example 1 described above.

The optical sensor module according to the present invention may be used for a detection means for detecting a finger touch position and the like on a touch panel, or information communications equipment and signal processors for transmitting and processing digital signals representing sound, images and the like at high speeds.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention.

## Claims

1. A method of manufacturing an optical sensor module, comprising the steps of:
(a) producing an optical waveguide section;
(b) producing a substrate section; and
(c) coupling the optical waveguide section and the substrate section together,
the step (a) including the substeps of
(a-1) forming a linear core for an optical path and positioning member for the positioning of the substrate section at the same time on a surface of an under cladding layer by a photolithographic process using a single photomask, the positioning member being disposed in an appropriate position relative to an end portion of the core, and
(a-2) forming an over cladding layer for covering the core and fitting portions for fitting engagement with the substrate section at the same time by a die-molding process, the fitting portions being disposed in part of the over cladding layer,
the step (b) including the substeps of
(b-1) placing an optical element mounting pad on a substrate,
(b-2) forming to-be-positioned portions to be positioned in the positioning member and to-be-fitted portions for fitting engagement with the fitting portions at the same time in respective appropriate positions of the substrate relative to the optical element mounting pad, and
(b-3) mounting an optical element on the optical element mounting pad,
the step (c) includes the step of
positioning said to-be-positioned portions of said substrate section by using said positioning member of said optical waveguide section and bringing said to-be-fitted portions of said substrate section into fitting engagement with said fitting portions of said optical waveguide section.

2. The method of manufacturing the optical sensor module according to claim 1, wherein said positioning member of said optical waveguide section are in the form of protruding portions of a generally U-shaped plan configuration or of an L-shaped plan configuration, and said to-be-positioned portions of said substrate section are in the form of plate portions for abutment against the inside surfaces of said protruding portions.

3. The method of manufacturing the optical sensor module according to claim 1, wherein said fitting portions of said optical waveguide section are in the form of groove portions extending across the thickness of the over cladding layer, and the width of portions of the groove portions corresponding to an upper surface portion of the over cladding layer decreases gradually in a downward direction from the upper surface of the over cladding layer, wherein said to-be-fitted portions of said substrate section are in the form of plate portions for fitting engagement with said groove portions, wherein said positioning member of said optical waveguide section are in the form of protruding portions of a generally U-shaped plan configuration, and the width of a generally U-shaped opening portion of the protruding portions decreases gradually in an inward direction from the opening end thereof, wherein said to-be-positioned portions of said substrate section are in the form of plate portions for abutment against the inside surfaces of said protruding portions, and wherein the optical waveguide section and the substrate section are coupled together by inserting said to-be-fitted portions of the substrate section into the upper ends of said groove portions of the optical waveguide section and thereafter inserting said to-be-positioned portions of the substrate section into the opening ends of said protruding portions of the generally U-shaped plan configuration to bring said to-be-positioned portions into abutment with the inner ends of the protruding portions.

4. An optical sensor module comprising:
an optical waveguide section; and
a substrate section with an optical element mounted therein,
said optical waveguide section and said substrate section being coupled to each other,
said optical waveguide section including
an under cladding layer,
a linear core for an optical path and formed on a surface of the under cladding layer,
positioning member for the positioning of the substrate section and formed in a portion lying in an appropriate position relative to an end portion of the core,
an over cladding layer for covering said core, and
fitting portions for fitting engagement with the substrate section and formed in a predetermined portion of the over cladding layer,
said substrate section including
a substrate having to-be-positioned portions to be positioned in the positioning member for the positioning of said substrate section, and to-be-fitted portions for fitting engagement with the fitting portions for fitting engagement with said substrate section,
an optical element mounting pad placed in a predetermined portion on the substrate, and
the optical element mounted on the optical element mounting pad,
the coupling between said optical waveguide section and said substrate section being provided by the positioning of said to-be-positioned portions of said substrate section by using said positioning member of said optical waveguide section, and by the fitting engagement of said to-be-fitted portions of said substrate section with said fitting portions of said optical waveguide section.

5. The optical sensor module according to claim 4, wherein said positioning member of said optical waveguide section are in the form of protruding portions of a generally U-shaped plan configuration or of an L-shaped plan configuration, and said to-be-positioned portions of said substrate section are in the form of plate portions for abutment against the inside surfaces of said protruding portions.

6. The optical sensor module according to claim 4, wherein said fitting portions of said optical waveguide section are in the form of groove portions extending across the thickness of the over cladding layer, and the width of portions of the groove portions corresponding to an upper surface portion of the over cladding layer decreases gradually in a downward direction from the upper surface of the over cladding layer, wherein said to-be-fitted portions of said substrate section are in the form of plate portions for fitting engagement with said groove portions, wherein saidpositioningmember of said optical waveguide section are in the form of protruding portions of a generally U-shaped plan configuration, and the width of a generally U-shaped opening portion of the protruding portions decreases gradually in an inward direction from the opening end thereof, and wherein said to-be-positioned portions of said substrate section are in the form of plate portions for abutment against the inside surfaces of said protruding portions.
